Europäisches Patentamt

**European Patent Office**

Office européen des brevets

(19)

(11) Numéro de publication: **0 013 544**

**A1**

(12)

# DEMANDE DE BREVET EUROPEEN

(21) Numéro de dépôt: 79830051.3

(22) Date de dépôt: **11.12.79**

(51) Int. Cl.³: **F 16 L 29/00**

(30) Priorité: **19.12.78 IT 8352478**

(43) Date de publication de la demande:
**23.07.80 Bulletin 80/15**

(84) Etats Contractants Désignés:
**AT BE CH DE FR GB LU NL SE**

(71) Demandeur: **LAVORAZIONI MECCANICHE LM DI PIGNAT & C. s.a.s.**
**Via Piave**
**I-33080 Porcia (Pordenone)(IT)**

(72) Inventeur: **Pignat, Carlo**
**n.1, via Monte Peralba**
**I-33080 Porcia (Pordenone)(IT)**

(72) Inventeur: **Pignat, Gino**
**n.3, via Pedron**
**I-33080 Porcia (Pordenone)(IT)**

(72) Inventeur: **Pignat, Gino di Carlo**
**n.7, via delle Acque**
**I-33080 Porcia (Pordenone)(IT)**

(72) Inventeur: **Pignat, Ivo**
**n.3, via Pedron**
**I-33080 Porcia (Pordenone)(IT)**

(74) Mandataire: **D'Agostini, Giovanni, Dr.**
**n. 17 via G.Giusti**
**I-33100 Udine(IT)**

(54) **Raccord à douille filetée muni de clapets à ouverture réglable.**

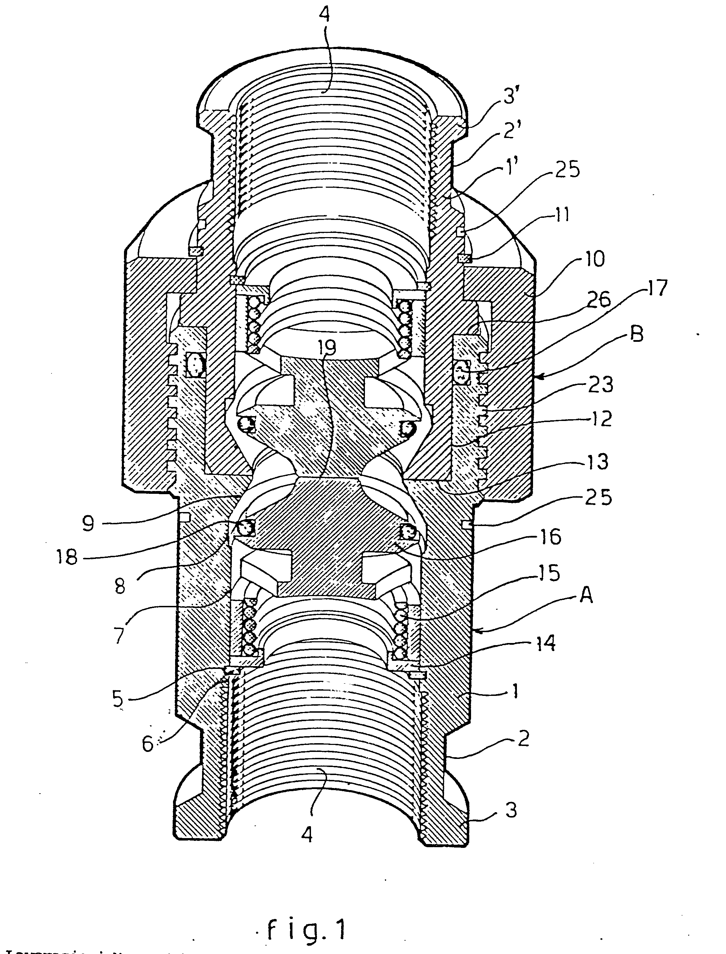

(57) Raccord à douille filetée constitué par deux demijoints (A,B) vissables à la termination des tuyaux et entre eux en étancheité, chacun comprenant dans l'intérieur creux,une soupape d'étancheité (16) pressée par un ressort (15) avec une tête débordant (19) étant prévu que dans le vissement les deux têtes (15) se repoussent ouvrant le passage au fluide dans les deux tuyaux (fig.1).

EP 0 013 544 A1

Croydon Printing Company Ltd.

TITRE MODIFIÉ
voir page de garde

- 1 -

## Joint rapid à vis pour tuyaux réglable dans l'ouverture.

L'invention concerne un joint rapid à vis pour tuyaux, réglable dans l'ouverture, particulièrement mais pas necessairement, utilisé pour la transmission de fluides et spécialement pour la transmission de fluides sous pression et en particulier huile hydraulique, pour joindre des tuyaux hydrauliques dans le command de dispositifs hydrauliques à huile sous pression.

L'utilisation de ce joint rapid et celle de joindre des tuyaux ou tubes flexibles entre eux, pour transmissions hydrauliques à huile sous pression.

Une particulière utilisation des dits joints rapids à vis est celle de joindre des tuyaux de transmission hydraulique pour le fonctionnement de dispositifs ou machines accessoires d'une machine principale, comme la connexion ou jonction: au une source de pression telle que une pompe à huile hydraulique d'alimentation, à un réservoir, à un dispositif de contrôle de la pression de l'huile etc., permettant aussi la disjonction ou séparation des dits tuyaux même s'ils restent sous pression.

Dans l'état actuel de la techinque, on rélève plusieurs inconvenients dans les acutels joints rapids à vis et en particulier on rescontre: l'absence de rapidité dans l'opé ration de jonction et disjonction; l'absence d'une tenue étanche dans cette opération, ce qui comporte l'utilisation de deux soupapes traditionelles avec l'emploi d'une soupape de purge ou vanne de décharge et soupape de retenue. On connait déja des joints à contre-pression de ressort qui éliminent une partie des inconvenients énoncés, mais ceux-ci ont l'inconvénient de ne permettre pas un régulier et large flux des fluides, ils sont enoutre pas résistants, de fon ctionnement limitée et ne sont pas réalisés de manière de permettre l'interchangeableté des pièces qui sont particuliè rement soumis à usure ou à défauts de fonctionnement obli geant l'utilisateur à changer le joint complet.

La présente invention a pour but d'apporter un remède aux incovénients énoncés et en particulier de rendre possible une jonction et disjonction rapide des tuyaux de liason en tre une machine principale et une machien ou dispositif au xiliaire commandé par la première même si les dits tuyaux sont sous pression, les preservant de la perte d'huile et en assûrant dans les demijoints séparés l'étanchété et céla sobstituant les deux soupapes traditionelles, et éliminant la soupape de purge et celle de retenue; prévoiant enoutre une structure telle qui puisse supporter dans le joint une pression supérieure par rapport aux types de joints connus en assûrant une jonction bien plus sûre avec une plus gran de efficacité de serrage tout en empêchant qui les demijoints detaches se saillent.

Suivant l'innovation le joint rapid est constitué par deux

0013544

demijoints qui sont caractérisés par un corps femelle et un corps mâle respectivement vissables entre eux, creux axialement, ayant une forme de tubes avec dans les extrémités respectives une prise de clé extérieure, et un filetage intérieur pour se visser à l'extrémité d'un tuyau étant prévu dans la partie creuse pas filété de chaque corps, l'installation d'une soupape de retenue interchangeable pressée par un ressort contre un épaulement vers l'ouverture dans la direction de jonction et étant prévu enoutre dans la tête de la dite soupape une garniture anulaire toroïdal en caoutchouc bien fermée dans la soupape,faisant siège d'étancheité contre le dit épaulement du corps qui est conique et où chaque tête de soupape en position d'étancheité fait saillie au déhors de manière que en vissant les deux demijoints les têtes des soupapes respectives vont se toucher se repoussant l'une contre l'autre et se déplaçant progresivement contre le ressort respectif pour ouvrir le passage du fluid dans l'intérieur des deux demijoints et pourtant dans les deux traits de tuyaux respectifs ainsi joints.

Une ultérieure caractéristique concerne le fait que chaque dite soupape présente une queue postérieure d'encaissement de l'extrémité du dit ressort, laquelle comporte des trous pour réaliser un passage du dit fluide à partir de l'ouverture du siège de la tête de soupape pour arriver dans l'intérieur du ressort et aprés dans le tuyau et vice-versa.

Les caracttéristiques enoncées séront en tout cas mieux comprises et évidencés et d'autres paraîtront dans la suivante description plus en détail à l'aide de dessins représentant seulement un mode d'exécution.

0013544

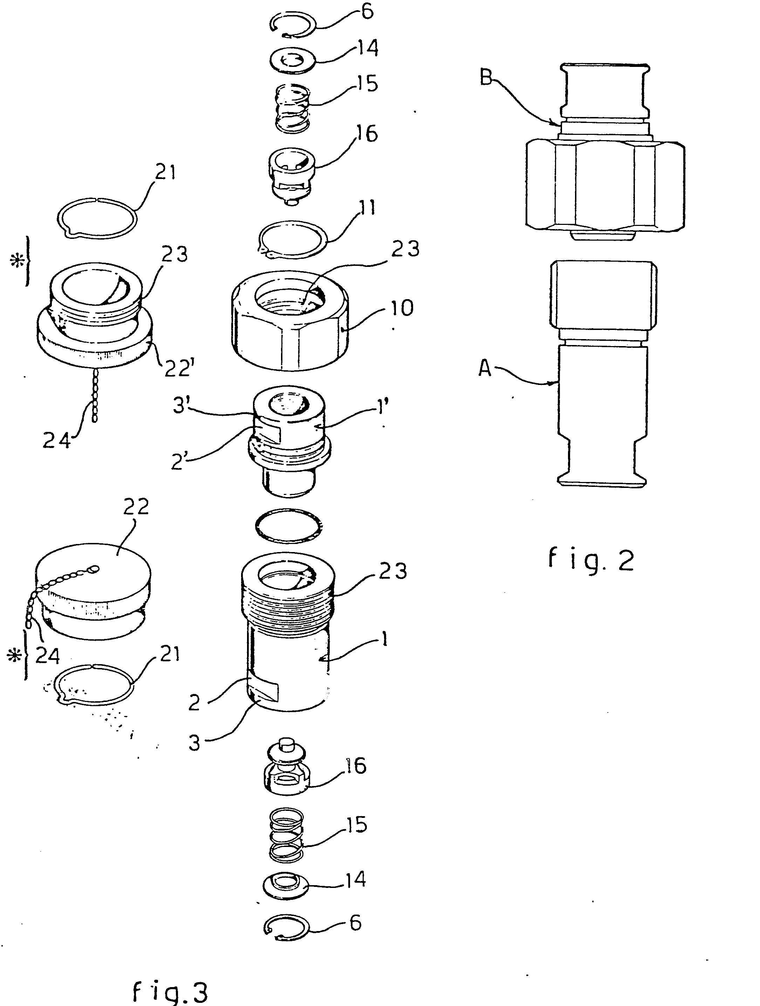

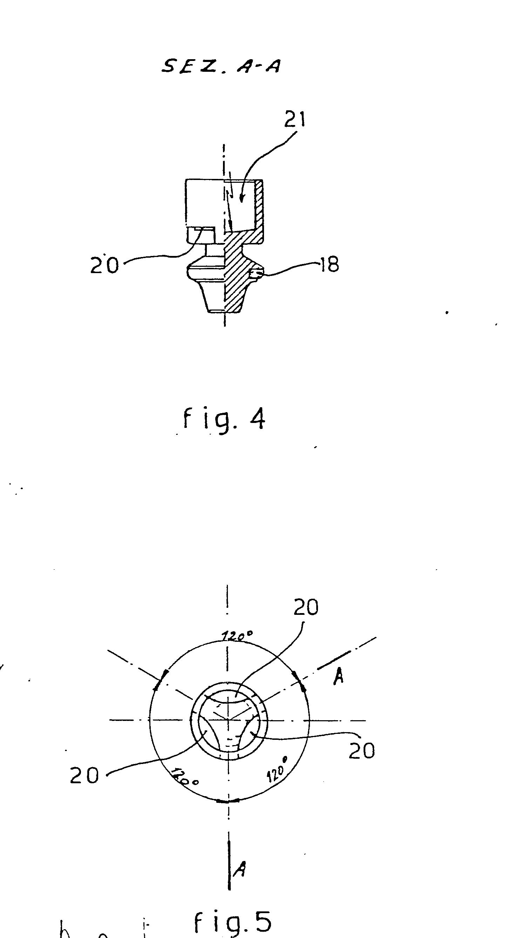

La figure 1 représente une vue en section axial en perspective du joint réalisé conformément à la presente invention où les deux demijoints sont vissés entre eux, sans illustrer le vissement aux tuyaux du type connu; la figure 2 représente une vue de côté du joint rapide en echelle réduite se référant à la fig.1 où les deux demijoints respectivement mâle et femelle sont détachés; la figure 3 représente une vue en perspective explosée à développement axial du joint, suivant les figures précédentes; la figure 4 représente une vue de la soupape d'étancheité/ouverture et reglage du flux,installée à l'intérieur de chaque corps mâle et femelle des deux demijoints en section axial A-A comme indiqué dans la figure 5; la figure 5 représente une vue de plan de la dite soupape illustrée dans la fig.4.

Comme on peut relever dans le figures et en particulier dans les figures 1,2,3 le joint est constitué par un demijoint mâle "A" et un demijoint femelle "B".
Le demijoint mâle "A" comprend un corps cylindrique creux à tube 1 avec une prise de clé 2 et bord terminal 3. Le demijoint femelle "B" comprend de même un corps cylindrique creux à tube 1' avec une prise de clé 2' ed un bord terminal 3'.
Soit le corps 1 du demijoint mâle "A" que le corps 1' du demijoint femelle "B" sont dans le trou intérieur structurés en manière identique et précisement ce trou comprend: un filétage d'extrémité intérieur 4 pour le respectif vissement à l'extrémité d'un tuyau; une rainure annulaire 5 pour une bague de retenue 6, un trou de passage 7, un légèr élargissement 8 et un épaulement à forme conique 9 pour les buts qui séront expliqués ci-aprés.

Le demijoint femelle "B" supporte rotativement libre un écrou de raccord 10 lequel est bloqué axialement par une bague d'arrêt 11 qui est logée dans une rainure annulaire pratiquée dans le corps 1'.

Soit l'extremité extérieure du corps creux (1) du demijoint mâle "A" que l'extremité intérieure de l'écrou 10 sur le dit demijoint creux "B", sont filétés pour se visser entre eux en serrage contre l'épaulement 26 comme indiqué en fig.1.

Le corps à tube 1' du demijoint femelle comporte une forme extérieure cylindrique 12 constituant une partie mâle qui s'accouple avec une partie femelle 12 pratique dans le corps à tube 1 du demijoint mâle, terminant sur l'épaulement 13 qui délimite sur les deux le dit épaulement conique 9 en opposition.

Dans l'intérieur des deux corps à tube 1,1' se trouvent bloqués par la bague de retenue 6, respectivement une bague d'arrêt 14, un ressort de compression 15 et une soupape 16.

Sur une des parois cylindriques 12 des corps 1,1' est prévue une rainure anulaire pour l'insertion d'une garniture annulaire d'étancheité 17 entre les deux corps.

La soupape 16 présente une conformation d'une tête avec une garniture annulaire d'étancheité 18, laquelle sous l'action du ressort 15 va battre contre le dit épaulement conique 9 pour réaliser une tenue étanche du tuyau vissé en 4, lorsque chaque demijoint est devissé.

La partie extérieure 19 de la tête de la dite soupape 16 poussée par le ressort 15, se penché au dehors du contre épaulement (13) lorsque la garniture annulaire d'étanchei té va battre contre l'épaulement conique 9.

Si les deux demijoints viennent vissés entre eux
les deux parties extérieures 19 opposées des deux
têtes des soupapes 16 se repoussent en fonction du visse
ment de l'écrou 10 en déterminant une ouverture plus ou
moins marquée pour le passage du fluide par l'éloignement
de la garniture 18 de l'épaulement conique de siège 9.
La garniture d'étancheité 18 est bien fermé dans la tête
de la dite soupape 16 de manière qu'elle ne puisse pas sor
tir et cela pour empêcher son déplacement  et assûrer la
étancheité du joint.

La dite soupape présente enoutre postérieurement une for
me de encaissement cylindrique 21 pour l'extremité du ressort
15 et dans la tête de l'encaissement cylindrique sont pra
tiqués trois trous 20 qui permettent le passage du fluide
à travers le demijoint et entre le ressort 15,ce qui per
met un passage de l'huile sans obstacles directement dans
le tuyau.

Le bord 3 empêche à la clé de glisser au dehors de la prise
de clé 2 pendant le vissage du demijoint au tuyau.

Une ultérieure caractéristique concerne le fait que chaque
demijoint mâle et femelle à l'aide d'une bague élastique
21 lie par une chaîne 24 un respectiv bouchon à vis femelle 22
et mâle 22' pour se visser à le respectif filetage 23 mâle du
corps du demijoint (A) et femelle de l'écrou 10 du demijoint
(B) étant prévu que chaque bague élastique 21 se loge dans
la rainure  respective 25 de chaque demijoint.

Udine, le 29 Novembre 1979

p.Lavorazioni Meccaniche IM di Pignat & C. s.a.s.

Le Mandataire

D'Agostini Dr.Giovanni

0013544

Revendications de brevet.

1. Joint à vis pour tuyaux, réglable dans l'ouverture, constitué par un demijoint mâle (A) et un demijoint femelle (B), chacun formé par un corps cylindrique creux axialement à tube (1,1') avec prise de clé (2) et filetage intérieur d'extremité (4) pour se visser à un tuyau,étant dans l'autre extremité, dotés de moyens de vissage entre eux, caractérisé en ce que chaque corps dans le trou intérieur comprend une soupape d'étancheité pressée par ressort de pression et debordant avec son tête de manière que à vissement des deux demijoints entre eux les deux soupapes se repoussent ouvrant le passage à un fluide entre les deux tuyaux ainsi joints, et en ce que dans l'intérieur de chaque corps cylindrique creux (1,1') des deux demijoints mâle (A) et femelle (B) à partir du filetage d'extremité intérieur (4) vers l'extremité ouverte opposée sont logés: une bague de retenue (6), une bague d'arrêt (14), le ressort de compression (15) qui puie contre la dite bague d'arrêt(14)et la soupape(16)laquelle est ainsi poussée par le dit ressort contre un épaulement d'extremité faisant siège d'étancheité(9)étant la dite partie creuse de logement dans les deux demijoints égale  et les dites pièces logées,interchangeables.

2. Joint selon 1, caractérisé en ce que la dite soupape (16) présente une queue à termination cylindrique enlargie avec un encaissement cylindrique (21) pour la respective extremité du dit ressort de compression, étant la base de l'encaissement cylindrique (21) percée avec trous(20) passants vers l'extérieur dans l'entour de la dite queue qui supporte la tête de la dite soupape (16) laquelle annulairement enferme  en correspondance du siège une garniture annulaire de caoutchouc d'étancheité (18) pas déplaçable, et cela en manière de permettre dans le retrait de la sou pape (16) le passage du fluide à l'extérieur de la dite garniture annulaire (18) et puis, à travers les trous (20), à l'intérieur de l'encaissement cylindrique (21) pour pour suivre dans l'intérieur du ressort de compression (15)et arriver enfin dans le tuyau et vice-versa.

3. Joint selon la revendication précédente, caractérisé en ce que l'épaulement d'extrémité faisant siège d'étan cheité (9) de chaque corps (1,1') est conique.

4. Joint selon la revendication 1 et 2 caractérisé en ce que le dit corps cylindrique creux (1) du demijoint mâle (A) présente de l'autre côté de l'épaulement d'étancheité conique (9) un contre épaulement (13) qui poursuit avec un trou élargi cylindrique (12) jusqu'au bord (26) et d'une manière analogue le corps cylindrique (1') de l'autre de mijoint (B) dans son extremité opposée extérieurement une for me cylindrique (12) mâle à partir du bord (13) jusq'a un épaulement (26)pour s'accoupler dans le trou précédent, étant prévu qu'au moins une des deux dites parois cylindri ques (12) présente une garniture annulaire (17) d'étanchei té entre les deux parois cylindriques même si celles-ci glissent entre elles et où l'extremité extérieure corre spondante du corps (1) du demijoint (A) est filetée et l'épaulement (26) dans le corps (1') du demijoint (B) deli mite une bride sur laquelle puie l'épaulement d'un écrou tournable (10)et bloqué à l'arrière par une bague elastique(11) étant le dit écrou (10) vissable dans le dit filetage (23) de l'autre, demijoint (A) pour approcher et éloigner toujours en état de étancheité les deux demijoints, en ouvrant les deux soupa pes respectives par le repoussement progressif entre elles en collision de tête (19).

5. Joint selon une quelconque des revendications précé dentes caractérisé en ce que chaque corps (1,1') présente dans la terminaison de la prise de clé (2) un bord (3) vers le tuyau.

6. Joint selon une quelconque des revendications précéden tes caractérisé en ce que chaque corps mâle ou femelle est doté d'un bouchon à vis respectivement femelle (22) et mâle (22') lié à chaque demijoint par une chaîne (24) pour se visser respectivement dans le filetage (23) du même demi joint dans le but d'enfermer la bouche de jonction des que les dits demijoints sont séparés.

7. Joint selon la revendication précédente caractérisé en ce que les bouchons de fermeture de la bouche de jonction de chaque demijoint, sont réalisés en matériel plastique flexible d'étancheité sans garnitures accessoi res.

Udine, le 29 Novembr 1979

p.Lavorazioni Meccaniche LM di Pignat & C. s.a.s.

Le Mandataire

D'Agostini Dr.Giovanni

0013544

fig.1

0013544

fig. 2

fig.3

avorazioni Meccaniche LM di Pignat & C. s.a.s.
Le Mandataire
D'Agostini Dr.Giovanni

*SEZ. A-A*

21

20

18

fig. 4

20

120°

20

A

20

120°

120°

A

fig.5

p.Lavorazioni Meccaniche IM di Pignat & C. s.a.s.
Le Mandataire
D'Agostini Dr.Giovanni

| Catégorie | Citation du document avec indication. en cas de besoin. des parties pertinentes | Revendication concernee |
|---|---|---|
| X | DE - A - 2 642 724 (FISCHER)<br>* Figure 2 *<br><br>-- | 1,3 |
| | US - A - 3 537 478 (EVANS)<br>* Figures *<br><br>-- | 1,3,4 |
| | US - A - 2 931 668 (BALEY)<br>* Figures *<br><br>-- | 1-4 |
| | FR - A - 2 033 563 (ETS. GUIOT CIE)<br>* Figures *<br><br>-- | 1-4 |
| | US - A - 4 002 186 (FINK)<br>* Figures *<br><br>---- | 1,6 |

## DOCUMENTS CONSIDERES COMME PERTINENTS

**CLASSEMENT DE LA DEMANDE (Int. Cl.)**

F 16 L 29/00

**DOMAINES TECHNIQUES RECHERCHES (Int. Cl.)**

F 16 L

**CATEGORIE DES DOCUMENTS CITES**

X: particulièrement pertinent
A: arrière-plan technologique
O: divulgation non-ecrite
P: document intercalaire
T: theorie ou principe a la base de l'invention
E: demande faisant interference
D: document cite dans la demande
L: document cite pour d'autres raisons
&: membre de la meme famille. document correspondant

Le present rapport de recherche a ete etabli pour toutes les revendications

| Lieu de la recherche | Date d'achevement de la recherche | Examinateur |
|---|---|---|
| La Haye | 18-04-1980 | HUBEAU |

OEB Form 1503.1  06.78